# EUROPEAN PATENT APPLICATION

(11) **EP 4 645 095 A1**
(43) Date of publication of application: **05.11.2025**
(21) Application number: 23909297.6
(22) Date of filing: 04.09.2023
(51) Int. Cl.: G06F 11/30, G06F 11/32, G06F 11/07

(54) **PROGRAM MEMORY OVERFLOW EARLY WARNING METHOD AND SYSTEM, ELECTRONIC DEVICE, AND COMPUTER STORAGE MEDIUM**

(30) Priority: 30.12.2022 CN 202211731708
(71) Applicant: Qianxun Spatial Intelligence Inc., Yangpu District Shanghai 200438 (CN)
(72) Inventor: WAN, Jingkun, Shanghai 200438 (CN)
(74) Representative: Barker Brettell LLP
(86) International application number: PCT/CN2023/116677
(87) International publication number: WO 2024/139359

(57) **Abstract**

A program memory overflow early warning method and system, an electronic device, and a computer storage medium. The method comprises: acquiring a plurality of real-time running parameters when a program is running (S110); and when at least one real-time running parameter is greater than a corresponding overflow early warning value, running a learning model to output a first early warning result according to a target running parameter (S120), the first early warning result indicating the cause of a program memory overflow early warning, and the target running parameter being a real-time running parameter greater than the corresponding overflow early warning value, wherein the overflow early warning value is determined by the learning model according to initial running information of each data structure, and the initial running information is running parameter information related to each data structure in a compiled program code.

## Description

### CROSS-REFERENCE TO RELATED APPLICATIONS

This application claims priority to Chinese Patent Application No. 202211731708.5, titled "METHOD FOR WARNING OVERFLOW OF PROGRAM MEMORY AND RELATED DEVICE" and filed on December 30, 2022, which is hereby incorporated by reference in its entirety.

### TECHNICAL FIELD

The present application belongs to the field of data processing technology, and in particular relates to a method for warning overflow of program memory, a system for warning overflow of program memory, an electronic device and a computer storage medium.

### BACKGROUND

During the operation of a program, a program memory overflow may occur. In the related art, a manual analysis is usually performed on the memory snapshot when the memory overflow occurs to troubleshoot the problem. However, this solution may cause the memory overflow to be quite serious when the problem is discovered, making it difficult to locate the problem.

### SUMMARY

The embodiments of the present application provide a method for warning overflow of program memory, a system for warning overflow of program memory, an electronic device and a computer storage medium, which can improve the phenomenon that the memory overflow in the related technology is more serious and difficult to be located.

In a first aspect, a method for warning overflow of program memory is provided, which may comprise:
obtaining a variety of real-time operation parameters when a program is operating;
when at least one of the real-time operation parameters is greater than a corresponding overflow warning value, operating a learning model to output a first warning result according to a target operation parameter, the first warning result indicating a cause of warning overflow of program memory, the target operation parameter being a real-time operation parameter greater than the corresponding overflow warning value,
wherein the overflow warning value is determined by the learning model according to an initial operation information of each of data structures, the initial operation information being an operation parameter information related to each of the data structures in a compiled program code.

In these examples, because the overflow warning is realized by using the real-time operation parameters and the corresponding overflow warning value during the program operation, the phenomenon of program memory overflow can be discovered as early as possible, and the overflow warning value is determined by the learning model according to the initial operation information of each data structure in the compiled program code, which conforms to the actual operation situation of the program. Therefore, the first warning result obtained by using the learning model and the target operation parameters can better indicate the cause of the overflow warning, realize the memory overflow location function, and has high accuracy. Therefore, the phenomenon that the memory overflow in the related technology is more serious and difficult to be located is improved.

Optionally, the operating a learning model to output a first warning result according to a target operation parameter comprises:
determining a target model, the learning model comprising a plurality of data structure allocation models, the target model being the data structure allocation model related to the target operation parameter in a plurality of the data structure allocation models;
calling the target model to check a target data structure related to the target operation parameter, so as to obtain the first warning result.

In these examples, the possible cause of program memory overflow can be automatically determined when the program memory is unhealthy, providing a reference for users to promptly discover program memory operation problems and quickly locate the main cause of the overflow.

Optionally, after obtaining the first warning result, the method further comprises:
locating a program code associated with the target data structure;
providing feedback to a user on the first warning result and the program code associated with the target data structure.

In these examples, the program code can be initially located, allowing the user to quickly determine the optimization points.

Optionally, an obtaining process of the learning model may comprises:
obtaining an environment information of the program, the environment information comprises at least one of a hardware configuration information of a device where the program is located and a dependent software environment information of the program;
constructing the data structure allocation model corresponding to each of the data structures through the environment information of the program.

In these examples, the learning model is constructed through hardware configuration information and the dependent software environment information of the program, and the distribution of different data structures in the program memory is considered, through the learning of large amounts of data, the memory allocation model of commonly used data types in the obtained learning model is conducive to the timely monitoring of subsequent program memory overflow warning and the accurate output of warning result.

Optionally, before obtaining a variety of real-time operation parameters when a program is operating, the method further comprises:
scanning the compiled program code to obtain the initial operation information of each of the data structures, the initial operation information comprises the initial operation parameters of each of the data structures and a number of the initial operation parameters;
configuring the corresponding overflow warning value for a plurality of the data structure allocation models in the learning model according to the initial operation parameters of each of the data structures and the number of the initial operation parameters.

In these examples, compared with the warning value configuration based on human experience and lack of real-world verification, the overflow warning values corresponding to different data structures can be reasonably configured, which improves the success rate of program memory overflow warning and ensures timely warning.

Optionally, after obtaining a variety of real-time operation parameters when a program is operating, the method further comprises:
performing a memory overflow warning for the compiled but not yet operated program through the variety of real-time operation parameters, so as to obtain a second warning result.

In these examples, a variety of real-time operation parameters can be obtained by sampling to provide the memory overflow warning for the compiled but not yet operated program in advance, thereby discovering possible memory overflow problem in advance and ensuring the normal operation of the program.

Optionally, the operating a learning model to output a first warning result according to a target operation parameter comprises:
operating the learning model to output the first warning result according to the target operation parameter and the second warning result.

In these examples, the second warning result in the static scenario is used as a reference to provide a reference basis for the warning in the dynamic scenario, thereby improving the accuracy of the program memory overflow warning.

In a second aspect, a system for warning overflow of program memory is provided, the system comprising:
an obtaining module, configured to obtain a variety of real-time operation parameters when a program is operating;
an operating module, configured to operate a learning model to output a first warning result according to a target operation parameter when at least one of the real-time operation parameters is greater than a corresponding overflow warning value, the first warning result indicating a cause of warning overflow of program memory, and the target operation parameter being a real-time operation parameter greater than the corresponding overflow warning value,
wherein the overflow warning value is determined by the learning model according to an initial operation information of each of data structures, and the initial operation information is an operation parameter information related to each of the data structures in a compiled program code.

In a third aspect, an electronic device is provided, the electronic device comprises a memory, a processor, and a program memory overflow warning program stored in the memory and operated on the processor, wherein the program memory overflow warning program can achieve steps of the method for warning overflow of program memory according to the first aspect.

In a fourth aspect, a computer storage medium is provided, wherein the computer storage medium, when executed by a processor, implements steps of the method for warning overflow of program memory according to the first aspect.

In a fifth aspect, a computer program product is provided, the computer program product includes a computer program, and when the computer program is executed by a processor, the steps of the method for warning overflow of program memory according to the first aspect can be implemented.

Compared with the related art, in a method for warning overflow of program memory, a system for warning overflow of program memory, an electronic device and a computer storage medium provided by the embodiments of the present application, a variety of real-time operation parameters are obtained when the program is operating; when at least one of the real-time operation parameters is greater than a corresponding overflow warning value, a learning model is operated to output a first warning result according to a target operation parameter, the first warning result can indicate a cause of warning overflow of program memory, the target operation parameter is a real-time operation parameter greater than the corresponding overflow warning value; because the overflow warning is realized by using the real-time operation parameters and the corresponding overflow warning value during the program operation process, the phenomenon of program memory overflow can be discovered as early as possible, and the overflow warning value is determined by the learning model according to the initial operation information of each data structure in the compiled program code, which conforms to the actual operation situation of the program. Therefore, the first warning result obtained by using the learning model and the target operation parameters can better indicate the cause of the overflow warning and realize the memory overflow location function with high accuracy. Therefore, the phenomenon that the memory overflow in the related technology is more serious and difficult to be located is improved.

### BRIEF DESCRIPTION OF THE DRAWINGS

In order to more clearly illustrate the technical solution of the embodiments of the present application, the drawings required to be used in the embodiments of the present application will be introduced briefly below, apparently, the drawings described below are only some embodiments of the present application. For those skilled in the art, other drawings can be obtained based on these drawings without creative work.
FIG. 1 is a schematic flow chart of a method for warning overflow of program memory in an embodiment of the present application.
FIG. 2 is another schematic flow chart of a method for warning overflow of program memory in an embodiment of the present application.
FIG. 3 is a schematic detailed flow chart of operating a learning model to output a first warning result according to a target operation parameter in the method for warning overflow of program memory in an embodiment of the present application.
FIG. 4 is a schematic block diagram of a system for warning overflow of program memory in another embodiment of the present application.
FIG. 5 is a schematic block diagram of an electronic device in another embodiment of the present application.

### DETAILED DESCRIPTION

The features and exemplary embodiments of various aspects of the present application will be described in detail below. In the detailed description below, many specific details are proposed to provide a comprehensive understanding of the present application. However, it is obvious to those skilled in the art that the present application can be implemented without some of these specific details. The following description of the embodiments is only for providing a better understanding of the present application by showing examples of the present application.

It should be noted that the embodiments and features in the embodiments of the present application can be combined with each other without conflict. The embodiments will be described in detail below in conjunction with the drawings.

Program memory overflow (Out Of Memory, OOM) means that there is unrecoverable memory or too much memory used in the program, which ultimately makes the memory used for program operation greater than the maximum memory that the system can provide.

In the related art, the solution to program memory overflow is usually to manually analyze the current memory snapshot or analyze the current memory snapshot through log files.

The method of manual analysis through memory snapshots requires too much resources, and when the program memory overflow is found, the memory overflow problem is already serious, and the problem can only be solved by restarting the system or program, and it is difficult to locate the essential cause of the memory overflow.

When analyzing the program memory overflow through log files, the memory overflow phenomenon has already reported an error, and different users have different understandings of log files. Therefore, this implementation method of the related technology discovers the memory overflow problem too late, affecting the normal operation of the program, and the standards for locating the problem are difficult to unify.

In summary, the memory overflow of the related technology is already serious when the problem is discovered, and it is difficult to locate the problem.

In order to solve at least one of the above technical problems, the embodiments of the present application proposes a method for warning overflow of program memory, a system for warning overflow of program memory, an electronic device and a computer storage medium to solve the above problems.

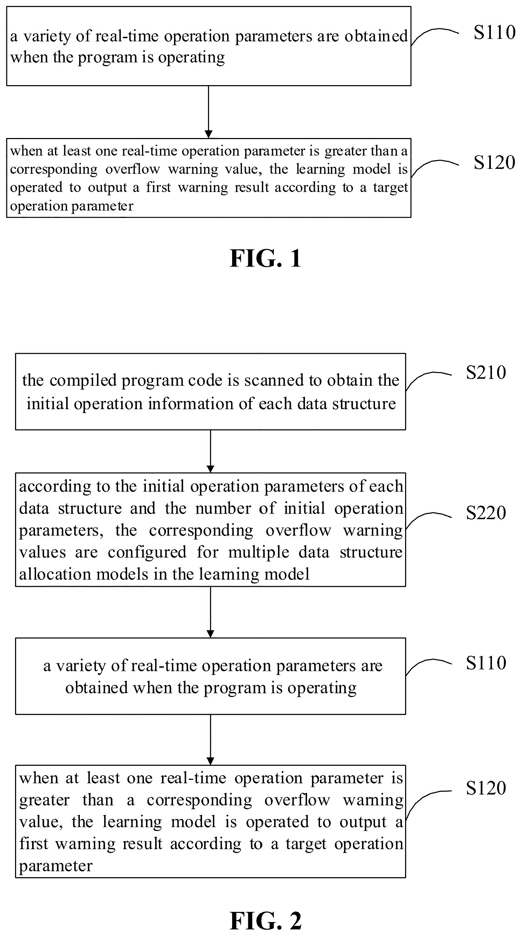

A method for warning overflow of program memory in the present application is first introduced below. Referring to FIG. 1, in one embodiment of the method for warning overflow of program memory in the present application, the method includes: S110 and S120.

In S 110, a variety of real-time operation parameters are obtained when the program is operating;
In S120, when at least one real-time operation parameter is greater than a corresponding overflow warning value, the learning model is operated to output a first warning result according to a target operation parameter.

The first warning result can indicate the cause of warning overflow of program memory, and the target operation parameter is a real-time operation parameter greater than the corresponding overflow warning value.

The above overflow warning value is determined by the learning model according to the initial operation information of each data structure, and the initial operation information is the operation parameter information related to each data structure in the compiled program code.

In the embodiments of the present application, a variety of real-time operation parameters are obtained when the program is operating; and then when at least one real-time operation parameter is greater than the corresponding overflow warning value, the learning model is operated to output the first warning result according to the target operation parameter, wherein the first warning result can indicate the cause of warning overflow of program memory, and the target operation parameter is a real-time operation parameter greater than the corresponding overflow warning value. Because the overflow warning is realized by means of the real-time operation parameter and the corresponding overflow warning value during the program operation process, the phenomenon of program memory overflow can be discovered as early as possible, and the overflow warning value is determined by the learning model according to the initial operation information of each data structure in the compiled program code, which conforms to the actual operation situation of the program. Therefore, the first warning result obtained by means of the learning model and the target operation parameter can better indicate the cause of the overflow warning, realize the memory overflow locating function, and has high accuracy. Therefore, the phenomenon that the memory overflow in the related technology is more serious and difficult to be located is improved.

In addition, the first warning result is obtained by controlling the operation of the learning model during the program operation according to the target operation parameter. Compared with different users' different understandings of log files, the output standards of the learning models for the warning result in the present application are consistent, and the consistency of the final locating problems is good.

The above-mentioned program can be developed by various programming languages. Exemplarily, the program memory overflow can refer to the Java program memory overflow or the Python program memory overflow.

In some optional examples, prior to S110, the memory allocation of various data structures involved in the programming language can be learned and assumed in advance, thereby converting the results of learning and assumption into a learning model.

The above-mentioned memory allocation is related to the basic data structure category of the program and the environmental parameters of the program.

Exemplarily, the learning model can be constructed based on the reasons for memory overflow of different programs. The learning model can include a variety of data structure allocation models, and different data structure allocation models can correspond to different data structures.

For some data structures, the existing strategy can be expressed by the model to obtain a data structure allocation model. For some data structures without established strategy, machine learning methods can be used for pre-training, and then the data structure allocation model corresponding to the some data structures can be obtained through machine learning training.

In other optional examples, the environment information of the program can be obtained, and the environment information can include at least one of the hardware configuration information of the device where the program is located and the dependent software environment information of the program, and then the data structure allocation model corresponding to each data structure can be constructed through the environment information of the program.

The hardware configuration information can include the parameters of the physical memory of the device machine, and the dependent software environment information of the program can include the development version of the software and software tools and the rule information related to the recycling algorithm.

Taking the overflow warning of the Java program memory as an example, the above-mentioned dependent software environment information can include the version of the Java language software development kit (Java Development Kit, JDK) and the garbage collection algorithm.

In these examples, the learning model is constructed by hardware configuration information and the dependent software environment information of the program, and the allocation of different data structures in the program memory is considered. Through the learning of large amounts of data, the memory allocation model of the commonly used data types in the obtained learning model is conducive to the timely monitoring of the subsequent program memory overflow warning and the accurate output of the warning results.

Referring to FIG. 2, after obtaining the learning model, before obtaining a variety of real-time operation parameters when the program is operating, the method can also include: S210 and S220.

In S210, the compiled program code is scanned to obtain the initial operation information of each data structure, the initial operation information includes the initial operation parameters of each data structure and the number of initial operation parameters;

In S220, according to the initial operation parameters of each data structure and the number of initial operation parameters, the corresponding overflow warning values are configured for multiple data structure allocation models in the learning model.

The initial operation parameters of each data structure can be the initialization and operation parameters of each data structure in the compiled program code. The initial operation parameters can include the basic configuration parameters of each data structure, and can also include data structure parameters in the third package directly referenced or indirectly referenced by the program code. In this example, the indirect and direct referenced initial operation parameters are considered when obtaining the initial operation information, so that the number of initial operation parameters obtained conforms to the actual program operation situation.

On this basis, corresponding weight ratios can be configured for different data structure allocation models, and overflow warning values of different data structure allocation models can be configured according to the weight ratios. Compared with the configuration of warning values based on human experience and lack of actual verification, the overflow warning values corresponding to different data structures can be reasonably configured, which improves the success rate of program memory overflow warning and ensures timely warning.

In some optional examples of S110, after completing the construction and configuration of the learning model, the learning model can be controlled to scan the operating program code to monitor the program memory in real time when the program is operating. In the real-time monitoring process, the data structure parameters involved in the program memory operation can be sampled, thereby sampling to obtain a variety of real-time operation parameters, which correspond to a variety of data structures and can reflect the memory allocation of each data structure.

Optionally, the real-time operation parameter can be a real-time expansion parameter related to the data structure memory. By sampling the real-time expansion parameter, the real-time memory allocation of the data structure during the dynamic operation of the program can be obtained.

In some optional examples of S120, various data structure allocation models in the learning model can be used to perform statistical detection on a variety of real-time operation parameters. When it is found that the difference with the initial operation parameter information of the pre-obtained data structure allocation model is too large, it is considered that the health status of the data structure does not meet expectations, and a warning can be issued to output the first warning result.

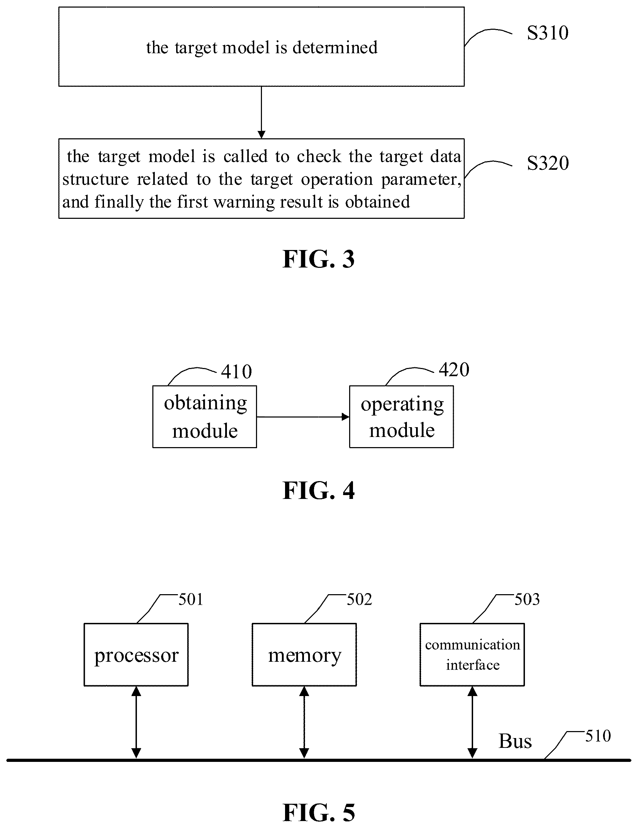

Optionally, referring to FIG. 3, the process of operating the learning model to output the first warning result according to the target operation parameter may include: S310 and S320.

In S310, the target model is determined, wherein the target model may be a data structure allocation model related to the target operation parameter in a plurality of data structure allocation models.

In S320, the target model is called to check the target data structure related to the target operation parameter, and finally the first warning result is obtained.

The real-time operation parameters obtained by real-time memory monitoring may be compared with the overflow warning values corresponding to data structure allocation models in the learning model. When at least one real-time operation parameter is greater than the corresponding overflow warning value, the data structure allocation model corresponding to the overflow warning value in the learning model may be operated for testing, thereby determining which data structure in the program memory does not match the health status of the learning model, and finally outputting the cause of warning overflow of program memory.

In these examples, the data structure allocation model in the learning model is set up based on the classification of causes of program memory overflow when the data structure allocation model in the learning model is constructed. Therefore, when the real-time operation parameters of a certain data structure exceed the corresponding overflow warning value, indicating that the real-time operation parameters after sampling do not match the assumed situation, the data structure allocation model can be operated to determine whether there is a problem with the target data structure related to the target operation parameter. In this way, the possible cause of program memory overflow can be automatically determined when the program memory is unhealthy, providing a reference for users to promptly discover program memory operation problems and quickly locate the main cause of overflow.

In some other optional examples, after obtaining the first warning result, the following steps can be executed: locating the program code associated with the target data structure; providing feedback to the user on the first warning result and the program code associated with the target data structure.

In this example, the program code associated with the target data structure can be found and located through the association relationship between the data structure and the program code. After obtaining the associated program code, the associated program code is fed back to the user together with the first warning result, thereby enabling the program code to be preliminarily located, so that the user can determine the optimization point as soon as possible.

In some other optional examples, after obtaining a variety of real-time operation parameters when the program is operating, a memory overflow warning for the compiled but not yet operated program can also be performed through the variety of real-time operation parameters, so as to obtain a second warning result.

The main difference between this example and the above example is that: memory overflow monitoring for not yet operated program in static scenarios is added, and memory overflow warning can be performed in advance for compiled but not yet operated program through the variety of real-time operation parameters obtained by sampling, so as to discover possible memory overflow problems in advance and ensure the normal operation of the program.

The above implementation process of warning memory overflow for compiled but not yet operated program can refer to the above learning model operation warning detection scheme in dynamic scenarios, which is not be repeated here.

In some other optional examples, in order to improve the accuracy of program memory overflow warning, when operating the learning model to output the first warning result according to the target operation parameters, the learning model can be operated, and then the first warning result can be output according to the target operation parameters and the second warning result.

It should be noted that when the target data structure related to the target operation parameters is tested by using the target operation parameters, the second warning result in the static scenario can be used as a reference to provide a reference basis for the warning in the dynamic scenario, thereby improving the accuracy of the program memory overflow warning.

The above describes in detail a method for warning overflow of program memory in the embodiments of the present application. The following will describe in detail a system for warning overflow of program memory in the embodiments of the present application in combination with FIG. 4.

Referring to FIG. 4, a system for warning overflow of program memory may include: an obtaining module 410 and an operating module 420.

The obtaining module 410 can be used to obtain a variety of real-time operation parameters when the program is operating;

The operating module 420 can be used to operate the learning model to output a first warning result according to the target operation parameter when at least one real-time operation parameter is greater than the corresponding overflow warning value. The first warning result indicates the cause of warning overflow of program memory. The target operation parameter is a real-time operation parameter greater than the corresponding overflow warning value;

The overflow warning value is determined by the learning model according to the initial operation information of each data structure, and the initial operation information is the operation parameter information related to each data structure in the compiled program code.

Optionally, the operating module 420 may include:
a determining unit, configured to determine the target model, the learning model includes multiple data structure allocation models, the target model is a data structure allocation model related to the target operation parameter in the multiple data structure allocation models; and
a calling unit, configured to call the target model to check the target data structure related to the target operation parameter, so as to obtain the first warning result.

Optionally, the system may also include:
a locating module, configured to locate the program code associated with the target data structure; and
a feedback module, configured to provide feedback to the user on the first warning result and the program code associated with the target data structure.

Optionally, the obtaining process of the learning model includes:
obtaining an environment information of program, the environment information includes at least one of the hardware configuration information of the device where the program is located and the dependent software environment information of the program;
constructing the data structure allocation model corresponding to each of the data structures through the environment information of the program.

Optionally, the system may also include:
a scanning module, configured to scan the compiled program code to obtain the initial operation information of each data structure, the initial operation information includes the initial operation parameters of each data structure and the number of initial operation parameters; and
a configuration module, configured to configure the corresponding overflow warning value for multiple data structure allocation models in the learning model according to the initial operation parameters of each data structure and the number of initial operation parameters.

Optionally, the system may also include:
a warning module, configured to perform a memory overflow warning for the compiled but not yet operated program through a variety of real-time operation parameters, so as to obtain a second warning result.

Optionally, the operating module 420 can also be configured to operate the learning model to output the first warning result according to the target operation parameter and the second warning result.

FIG. 5 shows a schematic diagram of a hardware structure of an electronic device provided in an embodiment of the present application, wherein the electronic device may include a processor 501 and a memory 502 storing computer program instructions.

Specifically, the above-mentioned processor 501 may include a central processing unit (CPU), or an application specific integrated circuit (ASIC), or may be configured to implement one or more integrated circuits of the embodiments of the present application.

The memory 502 may include a large-capacity memory for data or instructions. By way of example and not limitation, the memory 502 may include a hard disk drive (HDD), a floppy disk drive, a flash memory, an optical disk, a magneto-optical disk, a magnetic tape, or a universal serial bus (USB) drive or a combination of two or more of these. In appropriate cases, the memory 502 may include a removable or non-removable (or fixed) medium. In appropriate cases, the memory 502 may be inside or outside the electronic device. In a specific embodiment, the memory 502 is a non-volatile solid-state memory.

The memory 502 may include a read-only memory (ROM), a flash memory device, a random access memory (RAM), a disk storage medium device, an optical storage medium device, an electrical, optical or other physical/tangible memory storage device. Therefore, generally, the memory 502 includes one or more tangible (non-transitory) computer-readable storage media (e.g., a memory device) encoded with software, the software may include computer executable instructions, and when the software is executed (e.g., by one or more processors), it is operable to perform the operations described with reference to the method according to the above aspects of the present disclosure.

The processor 501 implements any one of the methods for warning overflow of program memory in the above embodiments by reading and executing the computer program instructions stored in the memory 502.

In one example, the electronic device may also include a communication interface 503 and a bus 510. As shown in FIG. 5, the processor 501, the memory 502, and the communication interface 503 are connected through the bus 510 and communicate with each other.

The communication interface 503 is mainly configured to implement the communication between the modules, systems, devices, units and/or devices in the embodiments of the present application.

Bus 510 includes hardware, software or both, coupling the components of the electronic device to each other. For example, but not limitation, the bus may include an accelerated graphics port (AGP) or other graphics bus, an enhanced industrial standard architecture (EISA) bus, a front-side bus (FSB), a hypertransport (HT) interconnect, an industrial standard architecture (ISA) bus, an infinite bandwidth interconnect, a low pin count (LPC) bus, a memory bus, a microchannel architecture (MCA) bus, a peripheral component interconnect (PCI) bus, a PCI-Express (PCI-X) bus, a serial advanced technology attachment (SATA) bus, a video electronics standard association local (VLB) bus or other suitable bus or a combination of two or more of these. Where appropriate, bus 510 may include one or more buses. Although a specific bus is described and illustrated in the embodiments of the present application, any suitable bus or interconnect is considered in the present application.

The electronic device can implement the method and system for warning overflow of program memory described in conjunction with FIGS. 1 to 4 based on the method for warning overflow of program memory in the above embodiments.

In conjunction with the method for warning overflow of program memory in the above embodiments, the embodiment of present application can provide a computer storage medium for implementation. The computer storage medium stores computer program instructions; when the computer program instructions are executed by the processor, any one of the methods for warning overflow of program memory in the above embodiments is implemented.

In addition, in conjunction with the method for warning overflow of program memory in the above embodiments, the embodiment of present application can provide a computer program product for implementation. The computer program product stores computer program instructions; when the computer program instructions are executed by the processor, any one of the methods for warning overflow of program memory in the above embodiments is implemented.

In addition, the term "and/or" in the present application is only a description of the association relationship of the associated objects, indicating that there can be three relationships. For example, A and/or B can represent three cases: A exists alone, A and B exist at the same time, and B exists alone. In addition, the character "/" in the present application generally indicates that the objects associated before and after are in an "or" relationship.

It should be understood that in the embodiments of the present application, "B corresponding to A" means that B is associated with A, and B can be determined based on A. However, it should also be understood that determining B based on A does not mean determining B based only on A, but B can also be determined based on A and/or other information.

The above is only a specific implementation of the present application, but the protection scope of the present application is not limited thereto. Any technician familiar with the technical field can easily think of various equivalent modifications or replacements within the technical scope disclosed in the present application, and these modifications or replacements should be included in the protection scope of the present application. Therefore, the protection scope of the present application shall be based on the protection scope of the claims.

## Claims

1. A method for warning overflow of program memory, comprising:
obtaining a variety of real-time operation parameters when a program is operating;
when at least one of the real-time operation parameters is greater than a corresponding overflow warning value, operating a learning model to output a first warning result according to a target operation parameter, the first warning result indicating a cause of warning overflow of program memory, the target operation parameter being a real-time operation parameter greater than the corresponding overflow warning value;
wherein the overflow warning value is determined by the learning model according to an initial operation information of each of data structures, the initial operation information being an operation parameter information related to each of the data structures in a compiled program code.

2. The method according to claim 1, wherein the operating a learning model to output a first warning result according to a target operation parameter comprises:
determining a target model, the learning model comprising a plurality of data structure allocation models, the target model being the data structure allocation model related to the target operation parameter in a plurality of the data structure allocation models;
calling the target model to check a target data structure related to the target operation parameter, so as to obtain the first warning result.

3. The method according to claim 2, after obtaining the first warning result, the method further comprises:
locating a program code associated with the target data structure;
providing feedback to a user on the first warning result and the program code associated with the target data structure.

4. The method according to claim 2, wherein an obtaining process of the learning model comprises:
obtaining an environment information of the program, the environment information comprises at least one of a hardware configuration information of a device where the program is located and a dependent software environment information of the program;
constructing the data structure allocation model corresponding to each of the data structures through the environment information of the program.

5. The method according to claim 4, wherein before obtaining a variety of real-time operation parameters when a program is operating, the method further comprises:
scanning the compiled program code to obtain the initial operation information of each of the data structures, the initial operation information comprises the initial operation parameters of each of the data structures and a number of the initial operation parameters;
configuring the corresponding overflow warning value for a plurality of the data structure allocation models in the learning model according to the initial operation parameters of each of the data structures and the number of the initial operation parameters.

6. The method according to claim 1, wherein after obtaining a variety of real-time operation parameters when a program is operating, the method further comprises:
performing a memory overflow warning for the compiled but not yet operated program through the variety of real-time operation parameters, so as to obtain a second warning result.

7. The method according to claim 6, wherein the operating a learning model to output a first warning result according to a target operation parameter comprises:
operating the learning model to output the first warning result according to the target operation parameter and the second warning result.

8. A system for warning overflow of program memory, comprising:
an obtaining module, configured to obtain a variety of real-time operation parameters when a program is operating;
an operating module, configured to operate a learning model to output a first warning result according to a target operation parameter when at least one of the real-time operation parameters is greater than a corresponding overflow warning value, the first warning result indicating a cause of warning overflow of program memory, and the target operation parameter being a real-time operation parameter greater than the corresponding overflow warning value,
wherein the overflow warning value is determined by the learning model according to an initial operation information of each of data structures, and the initial operation information is an operation parameter information related to each of the data structures in a compiled program code.

9. An electronic device, comprising a memory, a processor, and a program memory overflow warning program stored in the memory and operated on the processor, wherein the program memory overflow warning program executes steps of the method for warning overflow of program memory according to any one of claims 1 to 7.

10. A computer storage medium, wherein the computer storage medium, when executed by a processor, implements steps of the method for warning overflow of program memory according to any one of claims 1 to 7.
